# EUROPÄISCHE PATENTSCHRIFT

(11) **EP 1 924 783 B1**
(45) Veröffentlichungstag und Bekanntmachung des Hinweises auf die Patenterteilung: **29.04.2009**
(21) Anmeldenummer: 06791707.0
(22) Anmeldetag: 29.08.2006
(51) Int. Cl.: F16H 3/00

(54) **LASTSCHALTBARES GRUPPENGETRIEBE**
POWER SHIFTABLE GROUP TRANSMISSION
BOÎTE DE VITESSES À PLUSIEURS GROUPES À RAPPORTS EN CHARGE

(30) Priorität: 15.09.2005 DE 102005044068
(43) Veröffentlichungstag der Anmeldung: 28.05.2008
(73) Patentinhaber: Daimler AG, 70567 Stuttgart (DE)
(72) Erfinder: GITT, Carsten, 70327 Stuttgart (DE)
(74) Vertreter: JENSEN & SON
(86) Internationale Anmeldenummer: PCT/EP2006/008434
(87) Internationale Veröffentlichungsnummer: WO 2007/031193

(56) Entgegenhaltungen:
- WO-A-00/39484
- DE-A1- 4 330 170
- DE-A1- 10 037 398
- GB-A- 2 103 317

## Beschreibung

Die Erfindung betrifft ein lastschaltbares Gruppengetriebe gemäß dem Oberbegriff von Patentanspruch 1.

Aus der Fig. 3 der WO 00/39484, das den nächstliegender Stand der Technik repräsentiert, ist bereits ein lastschaltbares Gruppengetriebe mit zumindest zwei Eingangskonstanten, einer Vorgelegewelle und einer Doppelkupplung bekannt. Die Doppelkupplung umfasst zwei Einzelkupplungen. Ein Leistungspfad verläuft von der ersten Einzelkupplung über einen als Direktgang ausgeführten fünften Vorwärtsgang auf eine Hauptwelle. Die beiden diesem Direktgang unmittelbar benachbarten Vorwärtsgänge IV und VI verlaufen über die zweite Einzelkupplung und die Vorgelegewelle. Eine konzentrisch zu der Vorgelegewelle angeordnete Hohlwelle trägt zwei Zahnräder, von denen das eine Zahnrad der Eingangskonstante zugehörig ist. Ein der Doppelkupplung am nächsten stehendes Zahnrad der ersten Eingangskonstanten ist als Festrad ausgeführt.

Fig. 1 der besagten WO 00/39484 zeigt ein lastschaltbares Gruppengetriebe, bei welchem das der Doppelkupplung am nächsten stehendes Zahnrad der ersten Eingangskonstanten als Losrad ausgeführt ist. Dabei weist das Lastschaltbares Gruppengetriebe zwei zweite Vorwärtsgänge auf.

Weitere Getriebe sind der US 6,460,425 B, der DE 103 38 355 A1, der DE 43 30 170 A1, der DE 35 46 454 C2 und der DE 101 02 028 A1 zu entnehmen.

Aufgabe der Erfindung ist es, ein lastschaltbares Gruppengetriebe für Nutzfahrzeuge zu schaffen, welches eine hohe Anzahl von sequentiell lastschaltbaren Gängen ermöglicht.

Diese Aufgabe wird erfindungsgemäß mit den Merkmalen von Patentanspruch 1 gelöst.

Dabei weist das lastschaltbare Gruppengetriebe eine hohe Anzahl von Gängen auf und ist somit insbesondere für Nutzfahrzeuge geeignet. Es sind eine Splitgruppe, ein Direktgang, eine Hauptgruppe und eine Hohlwelle auf einer Vorgelegewelle vorgesehen. Zum einen kann zwischen einigen Gängen zugkraftunterbrechungsfrei geschaltet werden, indem die Eingangskonstanten in der Splitgruppe gewechselt wird, ohne dass jedoch die Übersetzungsstufe im Hauptgetriebe geändert wird. Solche Schaltungen verlaufen dabei im Gegensatz zu üblichen Doppelkupplungsgetrieben über das selbe Teilgetriebe bzw. die selbe Vorgelegewelle, wie dies ausführlich in der nicht vorveröffentlichten DE 102005033027.4 dargestellt ist. Der Offenbarungsgehalt der DE 102005033027.4 soll diesbezüglich auch in dieser Anmeldung als aufgenommen gelten. Zusätzlich kann in der vorliegenden Anmeldung zwischen zwei benachbarten Gängen, die durch eine Übersetzungsänderung innerhalb der Hauptgruppe zustande kommen, zugkraftunterbrechungsfrei geschaltet werden. Um diese Funktionalität zu gewährleisten, ist eine Hohlwelle koaxial zur Vorgelegewelle angeordnet. Diese Hohlwelle bildet somit nur für wenige Gänge ein zweites Teilgetriebe, dass unabhängig von der Vorgelegewelle rotiert, während die Hohlwelle in der überwiegenden Anzahl der Gänge drehfest mit der Vorgelegewelle gekoppelt ist.

Zu dieser Koppelung kann ein besonders ausgestaltetes Schaltelement vorgesehen sein. Dieses Schaltelement auf der Vorgelegewelle kann dabei in besonders vorteilhafter Weise derart ausgestaltet sein, dass bei diesem keine Neutralstellung vorgesehen ist. Stattdessen kann es in jeder von drei möglichen Stellungen mindestens zwei Getriebeelemente drehfest miteinander verbinden. Diese Getriebeelemente können in einer ersten - insbesondere vorderen - Stellung die Vorgelegewelle und eine Hohlwelle sein. In einer mittigen Stellung kann es sich bei den Getriebeelementen um die Vorgelegewelle, die Hohlwelle und ein Losrad handeln. In einer dritten Stellung kann es sich bei den Getriebeelementen um die Hohlwelle und ein Losrad handeln.

Patentanspruch 22 zeigt eine besonders vorteilhafte Auslegung des lastschaltbaren Gruppengetriebes mit einer geometrischen Stufung. Dabei ist zwischen der Mehrzahl - im Extremfall sogar allen - der benachbarten Vorwärtsgängen zumindest annähernd der gleiche Stufensprung.

Weitere Vorteile der Erfindung gehen aus den weiteren Patentansprüchen, der Beschreibung und der Zeichnung vor.

Die Erfindung ist nachfolgend anhand mehrerer Ausführungsbeispiele erläutert.

Dabei zeigen:
- Fig. 1: in einer ersten Ausführungsform ein lastschaltbares Gruppengetriebe, das als 16-Gang-Getriebe oder als 12-Gang-Getriebe mit zwei Kriechgängen ausgeführt sein kann,
- Fig. 2: den Leistungspfad des lastschaltbaren Gruppengetriebes gemäß Fig. 1 bei eingelegtem neunten Vorwärtsgang,
- Fig. 3: den verzweigten Leistungspfad des lastschaltbaren Gruppengetriebes gemäß Fig. 1 bei einer Überschneidungssteuerung vom eingelegten neunten Vorwärtsgang zum zehnten Vorwärtsgang,
- Fig. 4: den Leistungspfad des lastschaltbaren Gruppengetriebes gemäß Fig. 1 bei eingelegtem zehnten Vorwärtsgang,
- Fig. 5: den Leistungspfad des lastschaltbaren Gruppengetriebes gemäß Fig. 1 bei eingelegtem zehnten Vorwärtsgang und abgekoppelter zweiter Eingangskonstanten E2,
- Fig. 6: den Leistungspfad des lastschaltbaren Gruppengetriebes gemäß Fig. 1 bei eingelegtem elften Vorwärtsgang,
- Fig. 7: den verzweigten Leistungspfad des lastschaltbaren Gruppengetriebes gemäß Fig. 1 bei einer Überschneidungssteuerung vom eingelegten elften Vorwärtsgang zum zwölften Vorwärtsgang,
- Fig. 8: den Leistungspfad des lastschaltbaren Gruppengetriebes gemäß Fig. 1 bei eingelegtem zwölften Vorwärtsgang,
- Fig. 9: den verzweigten Leistungspfad des lastschaltbaren Gruppengetriebes gemäß Fig. 1 bei einer Überschneidungssteuerung vom eingelegten zwölften Vorwärtsgang zum dreizehnten Vorwärtsgang,
- Fig. 10: den Leistungspfad des lastschaltbaren Gruppengetriebes gemäß Fig. 1 bei eingelegtem dreizehnten Vorwärtsgang,
- Fig. 11: den verzweigten Leistungspfad des lastschaltbaren Gruppengetriebes gemäß Fig. 1 bei einer Überschneidungssteuerung vom eingelegtem dreizehnten Vorwärtsgang zum vierzehnten Vorwärtsgang,
- Fig. 12: den Leistungspfad des lastschaltbaren Gruppengetriebes gemäß Fig. 1 bei eingelegtem vierzehnten Vorwärtsgang,
- Fig. 13: den verzweigten Leistungspfad des lastschaltbaren Gruppengetriebes gemäß Fig. 1 bei einer Überschneidungssteuerung vom eingelegtem vierzehnten Vorwärtsgang zum fünfzehnten Vorwärtsgang,
- Fig. 14: den Leistungspfad des lastschaltbaren Gruppengetriebes gemäß Fig. 1 bei eingelegtem fünfzehnte Vorwärtsgang,
- Fig. 15: den verzweigten Leistungspfad des lastschaltbaren Gruppengetriebes gemäß Fig. 1 bei einer Überschneidungssteuerung vom eingelegtem fünfzehnten Vorwärtsgang zum sechzehnten Vorwärtsgang,
- Fig. 16: den Leistungspfad des lastschaltbaren Gruppengetriebes gemäß Fig. 1 bei eingelegtem sechzehnten Vorwärtsgang,
- Fig. 17: in einer zweiten Ausführungsform ein Lastschaltbares Gruppengetriebe, dass ähnlich Fig. 1, jedoch mit zwei identischen Vorgelegewellen ausgeführt ist,
- Fig. 18: ein Schaltdiagramm des lastschaltbaren Gruppengetriebes gemäß Fig. 1 oder Fig. 17, wenn dieses als 16-Gang-Getriebe ausgeführt ist,
- Fig. 19: ein Schaltdiagramm des lastschaltbaren Gruppengetriebes gemäß Fig. 1 oder Fig. 17, wenn dieses als 12-Gang-Getriebe mit zwei Kriechgängen ausgeführt ist,
- Fig. 20: in einer dritten Ausführungsform ein lastschaltbares Gruppengetriebe, das im Bereich der Schaltelemente für die Eingangskonstanten und die Hohlwelle Unterschiede zu den vorangegangenen beiden Ausführungsbeispielen aufweist,
- Fig. 21: in einer vierten Ausführungsform ein lastschaltbares Gruppengetriebe, dass als 20-Gang-Getriebe oder als 16-Gang-Getriebe mit zwei Kriechgängen oder als 12-Gang-Getriebe mit vier Kriechgängen ausgeführt sein kann,
- Fig. 22: für die vierte Ausführungsform als 12-Gang-Getriebe mit vier Kriechgängen einer erste mögliche Übersetzungsauslegung,
- Fig. 23: für die vierte Ausführungsform als 12-Gang-Getriebe mit vier Kriechgängen einer zweite mögliche Übersetzungsauslegung,
- Fig. 24: für die vierte Ausführungsform als 12-Gang-Getriebe mit vier Kriechgängen einer dritte mögliche Übersetzungsauslegung,
- Fig. 25: für die vierte Ausführungsform als 12-Gang-Getriebe mit vier Kriechgängen einer vierte mögliche Übersetzungsauslegung,
- Fig. 26: ein Schaltdiagramm des lastschaltbaren Gruppengetriebes gemäß Fig. 21 in der Ausführungsform als 20-Gang-Getriebe,
- Fig. 27: ein Schaltdiagramm des lastschaltbaren Gruppengetriebes gemäß Fig. 21 in der Ausführungsform als 16-Gang-Getriebe mit zwei Kriechgängen und
- Fig. 28: ein Schaltdiagramm des lastschaltbaren Gruppengetriebes gemäß Fig. 21 in der Ausführungsform als 12-Gang-Getriebe mit vier Kriechgängen.

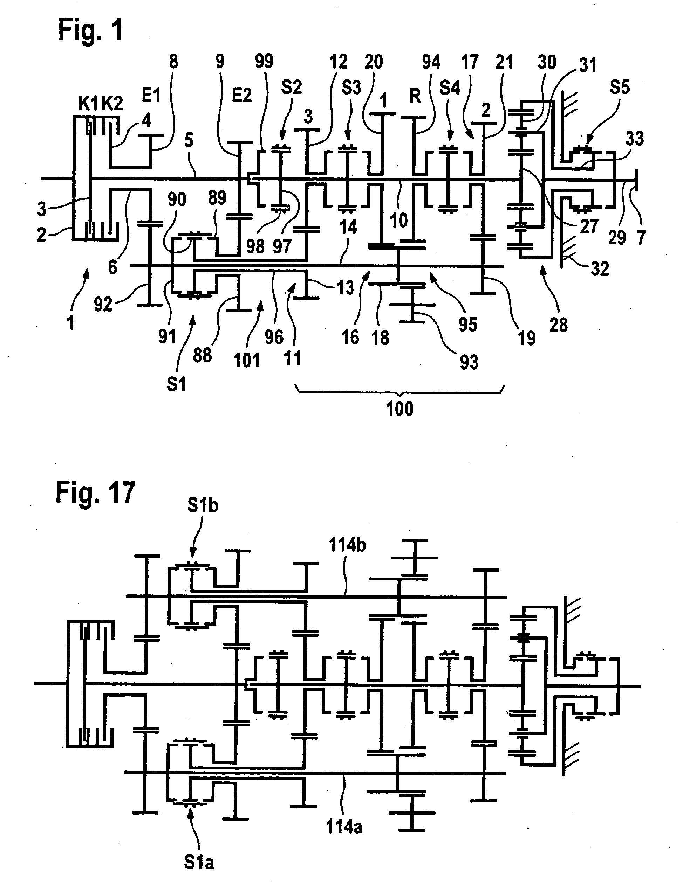

Fig. 1 zeigt ein lastschaltbares Gruppengetriebe, das eingangsseitig eine trockene Doppelkupplung 1 aufweist, die als Reibungskupplung ausgeführt ist. Eine Primärmasse 2 dieser Doppelkupplung 1 ist über einen Torsionsdämpfer mit einer Kurbelwelle eines Antriebsmotors verbunden. Im Folgenden wird die axial auf den Antriebsmotor weisende Richtung als "vorne" bezeichnet, wohingegen die axial auf einen Getriebeausgangsflansch 7 weisende Richtung als "hinten" bezeichnet wird. Dies entspricht der Einbaurichtung bei Fahrzeugen mit Heckantrieb und Frontmotor, wie diese Einbaurichtung bei drehmomentstarken Personenkraftwagen und Nutzfahrzeugen Anwendung finden kann. Die Primärmasse 2 ist alternativ mit zwei Kupplungsscheiben 3, 4 reibschlüssig koppelbar, von denen die erste Kupplungsscheibe 3 einer ersten Einzelkupplung K1 zugehörig ist, wohingegen die zweite Kupplungsscheibe 4 eine zweiten Einzelkupplung K2 zugehörig ist. Mit der ersten Einzelkupplung K1 ist das Drehmoment auf eine als Innenwelle 5 ausgebildete Zwischenwelle übertragbar, welche radial innerhalb einer hohlen Zwischenwelle 6 verläuft. Diese hohle Zwischenwelle 6 bildet ebenfalls eine zweite Zwischenwelle und ist mit der Kupplungsscheibe 4 der zweiten Einzelkupplung K2 verbunden.

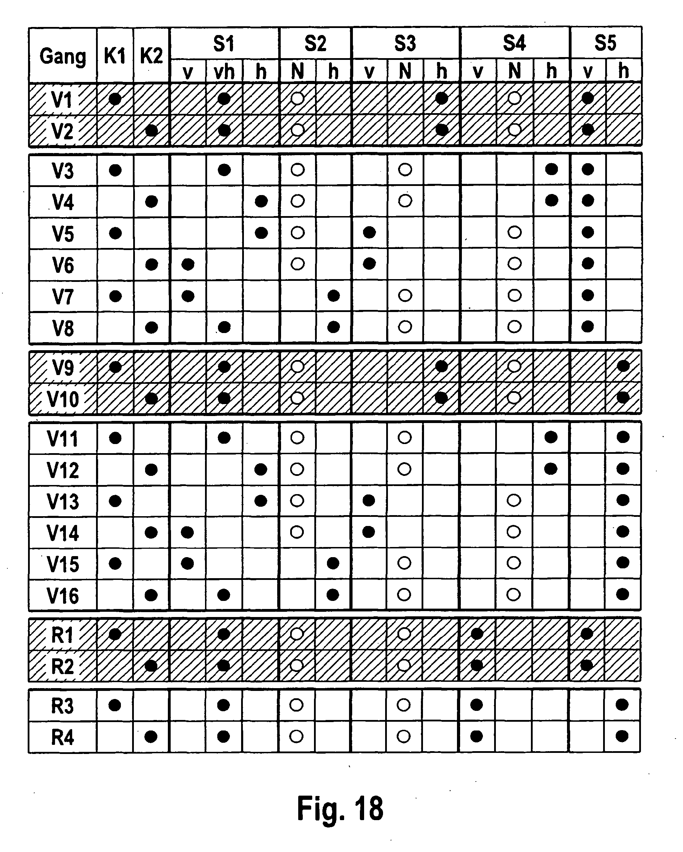

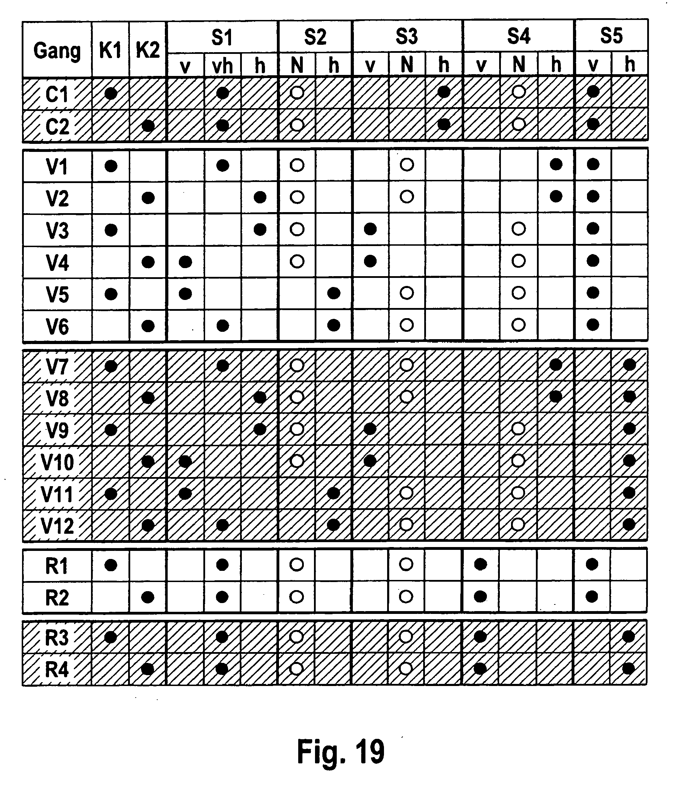

Die hohle Zwischenwelle 6 ist an deren rechtem Ende drehfest mit einem Festrad 8 verbunden, das das Eingangszahnrad einer ersten Eingangskonstanten E1 bildet. Die aus der hohlen Zwischenwelle 6 hinaus ragende Innenwelle 5 weist hingegen aufeinander folgend ein Festrad 9 und eine Schaltverzahnung 99 auf. Das Festrad 9 bildet das Eingangszahnrad einer zweiten Eingangskonstanten E2. Die Schaltverzahnung 99 ist am Ende der Innenwelle 5 angeordnet und mittels einer Schaltmuffe 98 drehfest mit einem Gleichlaufkörper 97 einer Hauptwelle 10 koppelbar. Der Gleichlaufkörper 97, die Schaltmuffe 98 und die Schaltverzahnung bilden damit ein zweites Schaltelement S2. Dabei stellt das zweite Schaltelement S2 in der vordersten Stellung v eine drehfeste Verbindung zwischen der Hauptwelle 10 und der Innenwelle 5 her, so dass der Direktgang eingelegt ist. In einer Neutralstellung N des zweiten Schaltelementes S2 ist die Innenwelle 5 hingegen von der Hauptwelle 10 drehbar entkoppelt. Diese beiden Schalstellungen v, N sind neben anderen Schaltstellungen in den Schaltdiagrammen Fig. 18 und Fig. 19 ersichtlich.

Die beiden Eingangskonstanten E1 und E2 bilden gemeinsam eine Splitgruppe.

Die Hauptwelle 10 liegt koaxial bzw. fluchtend zur Innenwelle 5 bzw. zur hohlen Innenwelle 6. Die Hauptwelle 10 ist dabei an deren vorderem Ende gegenüber der Innenwelle 5 in nicht näher dargestellter Weise wälzgelagert. Dem zweiten Schaltelement S2 folgt auf der Hauptwelle 10 ein Losrad 12. Dieses erste Losrad 12 kämmt mit einem Zahnrad 13, welches drehfest auf einer Hohlwelle 96 angeordnet ist. Somit bildet sich aus dem ersten Losrad 12 und dem Zahnrad 13 die erste Zahnradstufe 11 bzw. Übersetzungsstufe einer Hauptgruppe 100. Dahinter folgen die zweite Zahnradstufe 16 und die dritte Zahnradstufe 17. Deren Festräder 18, 19 sind auf einer koaxial zur Hohlwelle 96 angeordneten Vorgelegewelle 14 angeordnet, wohingegen deren Losräder 20, 21 auf Hauptwelle 10 angeordnet sind. Zwischen diesen beiden Zahnradstufen 16, 17 ist eine dem Rückwärtsgang R zugeordnete Zahnradstufe 95 angeordnet, die sich mit der Zahnradstufe 16 das Festrad 18 teilt. Dazu ist das Festrad 18 so breit ausgeführt, dass es in die beiden Zahnradebenen hineinragt. In der Zahnradebene des Rückwärtsganges R ist zusätzlich ein Zwischenrad 93 angeordnet, welches einerseits mit dem Festrad 18 und andererseits mit dem Losrad 94 kämmt. Dieses räumlich angeordnete Zwischenrad 93 ist der Übersichtlichkeit halber. lediglich zeichnerisch in die Zeichnungsebene geklappt dargestellt und dient der Drehrichtungsumkehr.

Zwischen dem ersten Losrad 12 und dem zweiten Losrad 20 ist das dritte Schaltelement S3 angeordnet, so dass es in der vorderen Stellung v eine drehfeste Verbindung zwischen der Hauptwelle 10 und dem Losrad 12 herstellt und in der hinteren Stellung h eine drehfeste Verbindung zwischen der Hauptwelle 10 und dem Losrad 20 herstellt. In der mittigen Stellung N befindet sich das dritte Schaltelement S3 in der Neutralstellung.

Zwischen dem Losrad 94 des Rückwärtsganges R und dem dahinter angeordneten Losrad 21 ist das vierte Schaltelement S4 angeordnet. Dieses vierte Schaltelement S4 ist einerseits in eine vordere Stellung v verschieblich, in der es eine drehfeste Verbindung zwischen der Hauptwelle 10 und dem Losrad 94 herstellt. Andererseits ist das vierte Schaltelement S4 in eine hintere Stellung h verschieblich, in der es eine drehfeste Verbindung zwischen der Hauptwelle 10 und dem Losrad 21 herstellt. Ferner ist das Schaltelement S4 in eine Neutralstellung N verschieblich.

Das hinterste Ende der Hauptwelle 10 ist mit einem Sonnenrad 27 verbunden, das das Eingangsglied einer als Planetengetriebe ausgebildeten Rangegruppe 28 bildet. Ein mehrere Planeten 30 tragender Planetenträger 31 ist drehfest mit der Getriebeausgangswelle 29 und dem Getriebeausgangsflansch 7 verbunden. Die Getriebeausgangswelle 29 ragt dabei durch eine Trennwand 32 zur Lagerabstützung. Ebenso ragt eine Hohlradträgerwelle 33 durch die Trennwand 32. Getriebeausgangsseitig der Trennwand 32 ist ein fünftes Schaltelement S5 angeordnet, mittels dem die Hohlradträgerwelle 33 wahlweise in einer Stellung v mit der getriebegehäusefesten Trennwand 32 und in einer Stellung h mit der Getriebeausgangselle 29 verbunden werden kann. Das fünfte Schaltelement S5 weist ferner eine mittige Neutralstellung N auf.

Das getriebeeingangsseitige Festrad 8 der ersten Eingangskonstanten E1 kämmt mit einem Festrad 92, welches koaxial drehfest auf der Vorgelegewelle 14 angeordnet ist. Axial hinter diesem Festrad 92 ist eine Schaltverzahnung 91 vorgesehen, welche mit einer drehfest an der besagten Hohlwelle 96 angeordnetem Gleichlaufkörperverzahnung 90 und einer Schaltverzahnung 89 korrespondiert. Letztere Schaltverzahnung 89 ist drehfest an einem Losrad 88 angeordnet, welches koaxial drehbar auf der Hohlwelle 96 angeordnet ist. Somit bilden die Schaltverzahnung 91, die Gleichlaufkörperverzahnung 90 und die Schaltverzahnung 89 ein Schaltelement S1, welches in einer vorderen Stellung v die die Hohlwelle 96 drehfest mit der Vorgelegewelle 14 koppelt. In einer hinteren Stellung h koppelt das erste Schaltelement S1 die Hohlwelle 96 hingegen mit dem Losrad 88. In einer mittigen Stellung vh koppelt das erste Schaltelement S1 die Hohlwelle 96 mit der Vorgelegewelle 14 und dem Losrad 88, so dass diese drei Bauteile verblockt sind. Da das Schaltelement S1 somit sowohl in der mittigen Stellung als auch in der hinteren Stellung das Losrad 88 und das Zahnrad 13 über die Hohlwelle 96 drehfest miteinander koppelt, wird in diesen beiden Stellungen von dem Losrad 88 und dem Zahnrad 13 ein Doppelrad 101 gebildet.

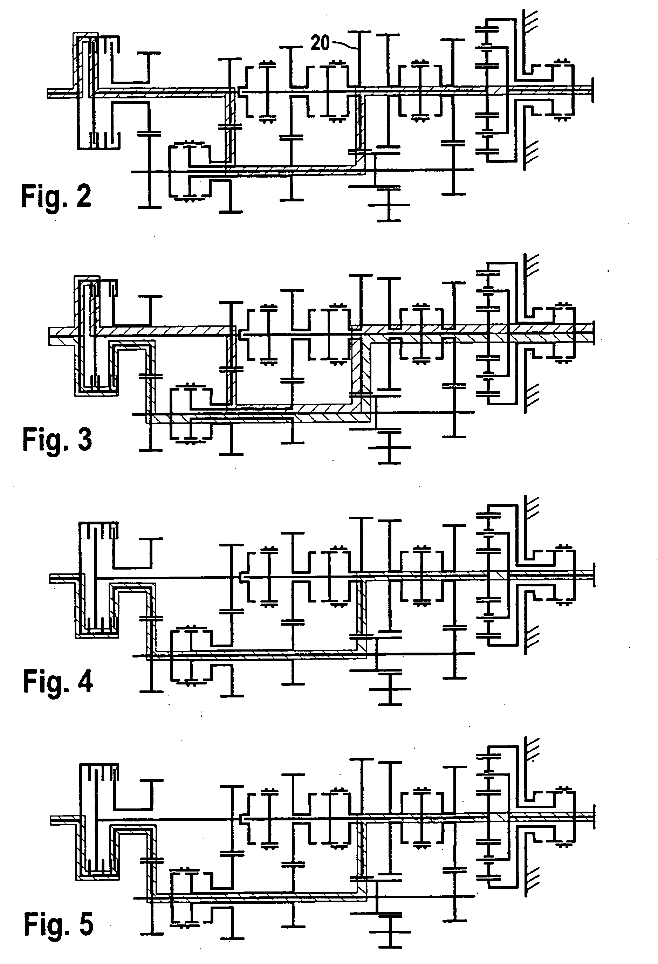

Fig. 2 zeigt den Leistungspfad des lastschaltbaren Gruppengetriebes gemäß Fig. 1 bei eingelegtem neunten Vorwärtsgang V9. Das erste Schaltelement S1 ist dabei in der besagten mittigen Stellung, in welcher eine drehfeste Verbindung zwischen dem Losrad 88 der Hohlwelle 96 und der Vorgelegewelle 14 geschaffen ist. Das zweite Schaltelement S2 und das vierte Schaltelement S4 sind in der Neutralstellung, wohingegen das dritte Schaltelement S3 in die hintere Stellung verschoben ist, in welcher es eine drehfeste Verbindung zwischen dem Losrad 20 und der Hauptwelle schafft. Das fünfte Schaltelement S5 ist in der hinteren Stellung. Die erste Einzelkupplung K1 ist eingerückt, wohingegen die zweite Einzelkupplung K2 ausgerückt ist. Somit verläuft der Leistungspfad im neunten Vorwärtsgang V9 über die erste Einzelkupplung K1, die Innenwelle 5, die zweite Eingangskonstante E2, die Vorgelegewelle 14, das breite Festrad 18, das Losrad 20, die Hauptwelle 10 und die verblockte Rangegruppe.

Fig. 3 zeigt den verzweigten Leistungspfad bei einer Überschneidungssteuerung vom eingerückten neunten Vorwärtsgang V9 zum zehnten Vorwärtsgang V10. Das Schaltelemente S1 bis S5 weisen eine gegenüber Fig. 2 unveränderte Stellung auf. Jedoch sind die beiden Einzelkupplungen K1 und K2 teilweise eingerückt. Somit verläuft der Leistungspfad im neunten Vorwärtsgang V9 entsprechend Fig. 2. Der Leistungspfad im zusätzlich eingelegten zehnten Vorwärtsgang V10 verläuft hingegen über die zweite Einzelkupplung K2, die erste Eingangskonstante E1, die Vorgelegewelle 14, das breite Festrad 18, das Losrad 20, die Hauptwelle 10 und die verblockte Rangegruppe 28.

Fig. 4 zeigt den Leistungspfad bei eingerückten zehnten Vorwärtsgang V10. Dabei ist gegenüber Fig. 3 lediglich die zweite Kupplung K2 vollständig eingerückt, wohingegen die erste Kupplung K1 vollständig ausgerückt ist. Die Stellung der Schaltelemente S1 bis S5 ist identisch Fig. 2 bzw. Fig. 3.

Um Reibungsverluste an der ersten Einzelkupplung K1 zu vermeiden, ist gemäß Fig. 5 bei eingerücktem zehnten Vorwärtsgang V10 die zweiten Eingangskonstante E2 abgekoppelt. Dazu ist das erste Schaltelement S1 während der Fahrt im zehnten Vorwärtsgang nach vorne verschoben worden, so dass das Losrad 88 von der noch immer mit der Hohlwelle 96 gekoppelten Vorgelegewelle 14 gelöst ist.

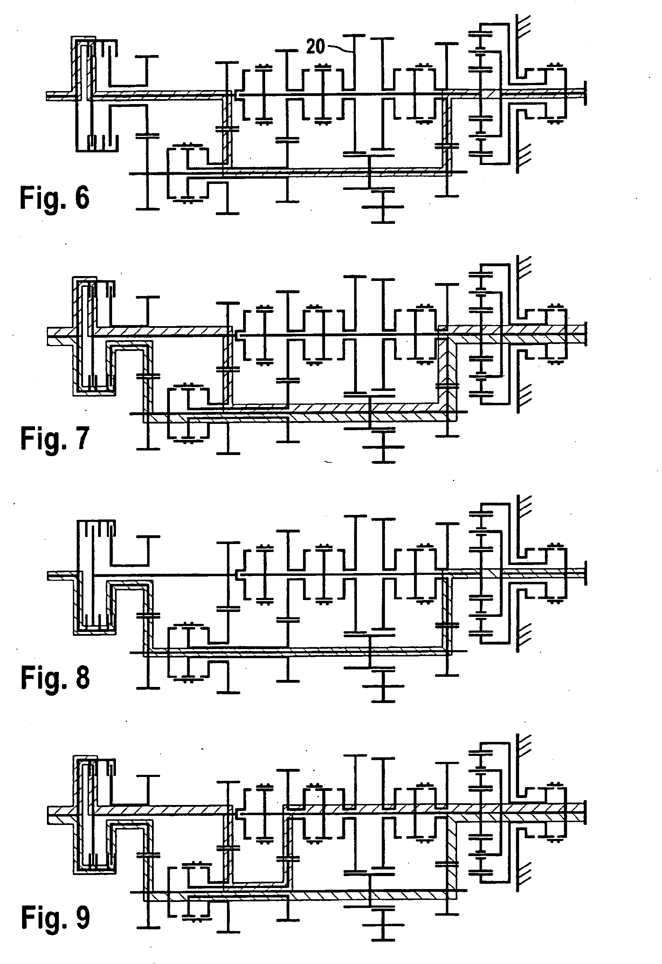

Fig. 6 zeigt den Leistungspfad bei eingelegtem elftem Vorwärtsgang V11. Das erste Schaltelement S1 ist dabei wieder in der mittigen Stellung, in welcher eine drehfeste Verbindung zwischen dem Losrad 88, der Hohlwelle 96 und der Vorgelegewelle 14 geschaffen ist. Das zweite Schaltelement S2 und das dritte Schaltelement S3 sind in der Neutralstellung, wohingegen das vierte Schaltelement S4 in die hintere Stellung verschoben ist, in welcher es eine drehfeste Verbindung zwischen dem Losrad 21 und der Hauptwelle 10 schafft. Das fünfte Schaltelement S5 ist in der hinteren Stellung. Die erste Einzelkupplung K1 ist eingerückt, wohingegen die zweite Einzelkupplung K2 ausgerückt ist. Somit verläuft der Leistungspfad im elften Vorwärtsgang V11 über die erste Einzelkupplung K1, die Innenwelle 5, die zweite Eingangskonstante E2, die Vorgelegewelle 14, das hinterste Festrad 19, das Losrad 21, die Hauptwelle 10 und die verblockte Rangegruppe 28.

Fig. 7 zeigt den verzweigten Leistungspfad bei einer Überschneidungssteuerung vom eingerückten elften Vorwärtsgang V11 zum zwölften Vorwärtsgang V12. Die Schaltelemente weisen mit Ausnahme des dritten Schaltelementes S3 eine gegenüber Fig. 2 unveränderte Stellung auf. Dieses dritte Schaltelement S3 ist zur Vorbereitung der in Fig. 7 dargestellten Überschneidungssteuerung eingerückt worden. Die beiden Einzelkupplungen K1 und K2 sind teilweise eingerückt. Somit verläuft der Leistungspfad im elften Vorwärtsgang V11 entsprechend Fig. 6. Der Leistungspfad im zusätzlich eingerückten zwölften Vorwärtsgang V12 verläuft hingegen über die zweite Einzelkupplung K2, die erste Eingangskonstante E1, die Vorgelegewelle 14, das Festrad 19, das Losrad 21, die Hauptwelle 10 und die verblockte Rangegruppe 28.

Fig. 8 zeigt den Leistungspfad bei eingerücktem zwölftem Vorwärtsgang V12. Dabei ist gegenüber Fig. 7 lediglich die zweite Kupplung K2 vollständig eingerückt, wohingegen die erste Kupplung K1 vollständig ausgerückt ist. Die Stellung der Schaltelemente S1 bis S5 ist identisch Fig. 7.

Fig. 9 zeigt den verzweigten Leistungspfad bei einer Überschneidungssteuerung vom eingerückten zwölften Vorwärtsgang V12 zum dreizehnten Vorwärtsgang V13. Das erste Schaltelement S1 ist gegenüber Fig. 8 nach hinten verschoben, wohingegen das dritte Schaltelement S3 gegenüber Fig. 8 nach vorne verschoben ist. Die übrigen Schaltelemente S2, S4, S5 weisen eine gegenüber Fig. 8 unveränderte Stellung auf. Die beiden Einzelkupplungen K1 und K2 sind teilweise eingerückt. Somit verläuft der Leistungspfad im zwölften Vorwärtsgang V12 entsprechend Fig. 8. Der Leistungspfad im zusätzlich eingerückten dreizehnten Vorwärtsgang V13 verläuft hingegen über die erste Einzelkupplung K1, die zweite Eingangskonstante E2, die mit der Vorgelegewelle 14 über das erste Schaltelement S1 gekoppelte Hohlwelle 96, das Zahnrad 13, das Losrad 12, die Hauptwelle 10 und die verblockte Rangegruppe 28.

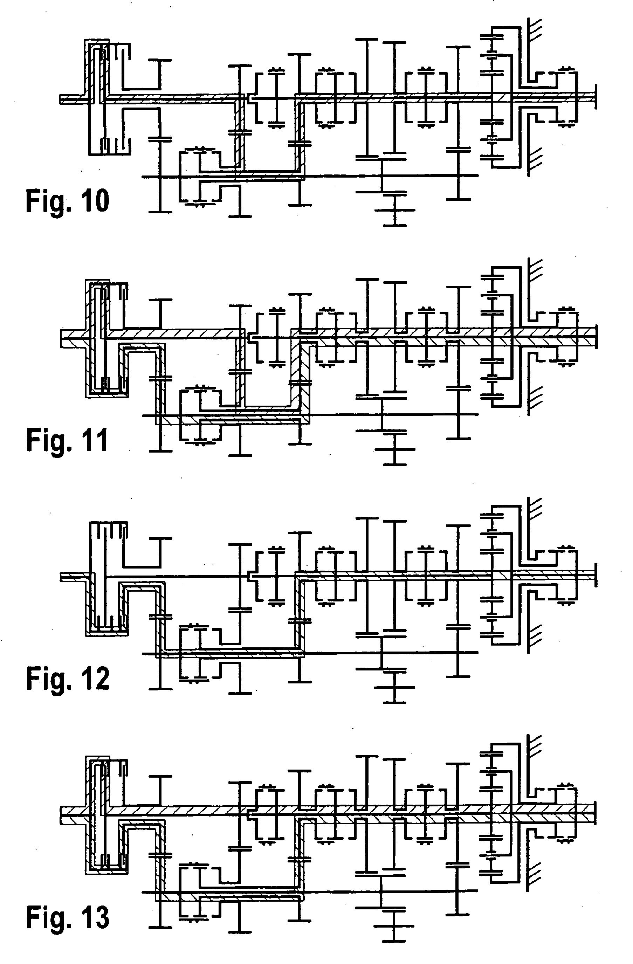

Fig. 10 zeigt den Leistungspfad des Lastschaltbares Gruppengetriebes gemäß Fig. 1 bei eingerücktem dreizehnten Vorwärtsgang V13. Gegenüber Fig. 9 ist das erste Schaltelement S1 in die mittige Stellung verschoben während das vierte Schaltelement S4 in die mittige Neutralstellung verschoben ist. Somit verläuft der Leistungspfad im dreizehnten Vorwärtsgang V13 entsprechend Fig. 9.

Fig. 11 zeigt den verzweigten Leistungspfad bei einer Überschneidungssteuerung vom eingerückten dreizehnten Vorwärtsgang V13 zum vierzehnten Vorwärtsgang V14. Sämtliche Schaltelemente S1 bis S5 weisen eine gegenüber Fig. 10 unveränderte Stellung auf. Die beiden Einzelkupplungen K1 und K2 sind teilweise eingerückt. Somit verläuft der Leistungspfad im dreizehnten Vorwärtsgang V13 entsprechend Fig. 10. Der Leistungspfad im zusätzlich eingelegten vierzehnten Vorwärtsgang V14 verläuft hingegen über die zweite Einzelkupplung K2, die erste Eingangskonstante E1, die Vorgelegewelle 14 bzw. die drehfest mit dieser gekoppelte Hohlwelle 96, das Zahnrad 13, das Losrad 12, die Hauptwelle 10 und die verblockte Rangegruppe 28.

Fig. 12 zeigt den Leistungspfad bei eingerücktem vierzehntem Vorwärtsgang V14. Dabei ist gegenüber Fig. 11 lediglich die zweite Kupplung K2 vollständig eingerückt, wohingegen die erste Kupplung K1 vollständig ausgerückt ist. Die Stellung der Schaltelemente S1 bis S5 ist identisch Fig. 11.

Fig. 13 zeigt den verzweigten Leistungspfad bei einer Überschneidungssteuerung vom eingerückten vierzehnten Vorwärtsgang V14 zum fünfzehnten Vorwärtsgang V15. Das erste Schaltelement S1 ist gegenüber Fig. 12 nach hinten verschoben, wohingegen das zweite Schaltelement S2 zum Einlegen des Direktganges gegenüber Fig. 12 nach vorne verschoben ist. Die übrigen Schaltelemente S3, S4, S5 weisen eine gegenüber Fig. 12 unveränderte Stellung auf. Die beiden Einzelkupplungen K1 und K2 sind teilweise eingerückt. Somit verläuft der Leistungspfad im vierzehnten Vorwärtsgang V14 entsprechend Fig. 12. Der Leistungspfad im zusätzlich eingelegten fünfzehnten Vorwärtsgang V15 - d.h. dem Direktgang - verläuft hingegen über die erste Einzelkupplung K1, die Innenwelle 5, die Hauptwelle 10 und die verblockte Rangegruppe 28 auf die Getriebeausgangswelle 29.

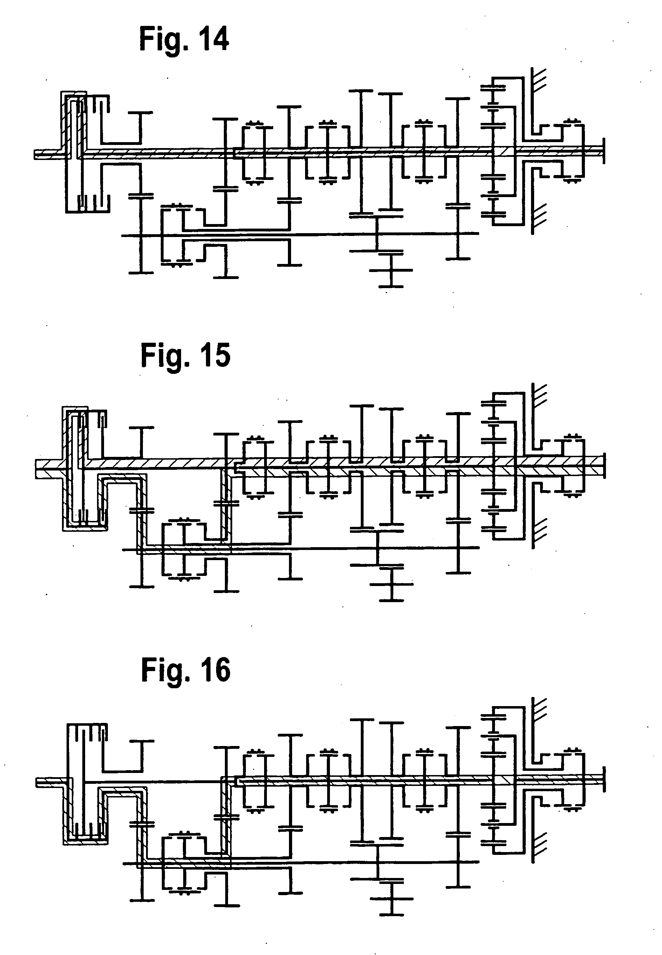

Nach dem vollständigen Öffnen der zweiten Einzelkupplung K2 oder alternativ kurz vor der vollständigen Öffnung der zweiten Einzelkupplung K2 wird gemäß Fig. 14 das dritte Schaltelement S3 die mittige Neutralstellung verschoben. Somit ist der Direktgang eingelegt, wobei die Vorgelegewelle 14 entkoppelt ist. Lediglich die Hohlwelle 96 wird mit zwei Verzahnungspaaren.mitgeschleppt.

Fig. 15 zeigt den verzweigten Leistungspfad bei einer Überschneidungssteuerung vom eingerückten Direktgang zum sechzehnten - und höchsten - Vorwärtsgang V16. Die Schaltelemente weisen mit Ausnahme des ersten Schaltelementes S1 eine gegenüber Fig. 14 unveränderte Stellung auf. Die beiden Einzelkupplungen K1 und K2 sind teilweise eingerückt. Somit verläuft der Leistungspfad im Direktgang entsprechend Fig. 14. Der Leistungspfad im zusätzlich eingelegten sechzehnten Vorwärtsgang V16 verläuft hingegen über die zweite Einzelkupplung K2, die erste Eingangskonstante E1, die Vorgelegewelle 14 bzw. die drehfest mit dieser gekoppelte Hohlwelle 96, die zweite Eingangskonstante E2, das zweite Schaltelement S2, die Hauptwelle 10 und die verblockte Rangegruppe 28.

Fig. 16 zeigt den Leistungspfad bei eingerückten sechzehnten Vorwärtsgang V16. Dabei ist gegenüber Fig. 15 lediglich die zweite Kupplung K2 vollständig eingerückt, wohingegen die erste Kupplung K1 vollständig ausgerückt ist. Die Stellung der Schaltelemente S1 bis S5 ist somit identisch Fig. 11.

In Fig. 2 bis Fig. 16 sind lediglich die Vorwärtsgänge V9 bis V16 dargestellt, da sich die ersten acht Vorwärtsgänge V1 bis V8 lediglich durch die Schaltstellung der Rangegruppe 28 unterscheiden.

Fig. 17 zeigt in einer zweiten Ausführungsform ein lastschaltbares Gruppengetriebe, das ähnlich dem lastschaltbaren Gruppengetriebe gemäß Fig. 1 bis Fig. 16 ausgeführt ist. Anstelle der in Fig. 1 vorgesehenen einen Vorgelegewelle 14 sind jedoch zwei identische Vorgelegewellen 114a, 114b vorgesehen. Diese beiden Vorgelegewellen 114a, 114b weisen identisch ausgestaltete Schaltelemente S1a, S1b auf. Diese beiden Schaltelemente S1a, S1b erfüllen die Funktion des Schaltelementes S1 gemäß Fig. 1 und werden zeitlich parallel betätigt, wozu beispielsweise ein einziges Stellglied vorgesehen sein kann. Die Verwendung von zwei Vorgelegewellen 114a, 114b reduziert die Auflagerkräfte, so dass die Lagerreibung und die Wellendurchbiegung gegenüber dem Ausführungsbeispiel gemäß Fig. 1 verringert wird und das Getriebegehäuse kleiner dimensioniert werden kann.

Fig. 18 zeigt ein Schaltdiagramm der ähnlich aufgebauten lastschaltbaren Gruppengetriebe gemäß Fig. 1 und Fig. 17, wenn diese als 16-Gang-Getriebe ausgeführt sind. Dabei sind in den Zeilen aufeinander folgend die Vorwärtsgänge V1 bis V16 dargestellt. Darauf folgend sind in den Zeilen die Rückwärtsgänge R1 bis R4 dargestellt. Die schraffierten Zeilen stellen erste Ganggruppen von sequentiell lastschaltbaren Vorwärts- und Rückwärtsgängen V1, V2 und V9, V10 und R1, R2 dar. Die nicht schraffierten Zeilen stellen zweite Ganggruppen von sequentiell lastschaltbaren Vorwärts- und Rückwärtsgängen V3 bis V8, V11 bis V16 und R3, R4 dar. Die Ganggruppen sind dabei alternierend angeordnet, so dass einer ersten Ganggruppe eine zweite Ganggruppe folgt, der wiederum eine erste Ganggruppe folgt. Zwischen zwei verschiedenen Ganggruppen - d.h. zwischen einer ersten und einer zweiten Ganggruppe bzw. zwischen einer zweiten Ganggruppe und einer ersten Ganggruppe - ist keine sequentielle Lastschaltbarkeit gegeben. Diese Übergänge ohne Lastschaltbarkeit sind durch Doppelstriche dargestellte. In den Spalten sind aufeinander folgend die Schaltzustände der ersten Einzelkupplung K1, der zweiten Einzelkupplung K2, des ersten Schaltelementes S1, des zweiten Schaltelementes S2, des dritten Schaltelementes S3, des vierten Schaltelementes S4 und des fünften Schaltelementes S5 dargestellt. Für jedes der Schaltelemente S1 bis S5 ist in separaten Spalten dargestellt, in welche Stellung es in welchem Gang eingerückt ist, woraus sich auch die Anzahl der möglichen Stellungen pro Schaltelement ergibt. Dabei kennzeichnet
- "v" die vordere Stellung eines der Schaltelemente S1, S3 bis S5 bzw. S1a, S1b,
- "h" die hintere Stellung eines der Schaltelemente S1 bis S5 bzw. S1a, S1b,
- "vh" die mittige Stellung des Schaltelementes S1, bzw. S1a, S1b und
- "N" die Neutralstellung eines der Schaltelemente S2 bis S4.

Fig. 19 zeigt ein Schaltdiagramm der ähnlich aufgebauten lastschaltbaren Gruppengetriebe gemäß Fig. 1 und Fig. 17, wenn diese als 12-Gang-Getriebe mit zwei Kriechgängen C1 und C2 ausgeführt ist. Ansonsten ist die Bezeichnung analog Fig. 18.

Bei dieser Ausführungsform mit zwei Kriechgängen C1, C2 und zwölf Vorwärtsgängen V1 bis V12 kann die Übersetzung der Zahnradpaarung mit dem größten Übersetzungsverhältnis - d.h. Festrad 18 und Losrad 20 - innerhalb der Hauptgruppe 100 derart gewählt werden, dass zwischen dem zweiten Kriechgang C2 und dem ersten Vorwärtsgang V1 ein größerer Stufensprung liegt als zwischen den übrigen jeweils benachbarten Vorwärtsgängen. Dadurch wird eine größere Gesamtspreizung des Getriebes.erreicht.

Ferner kann der Stufensprung zwischen dem letzten Vorwärtsgang V6 der kleinen Ganggruppe und dem ersten Vorwärtsgang V7 der großen Ganggruppe größer als die restlichen Stufensprünge gewählt werden. Daraus ergibt sich dann eine große Gesamtspreizung.

Alternativ kann der Stufensprung zwischen dem letzten Vorwärtsgang V6 der kleinen Ganggruppe und dem ersten Vorwärtsgang V7 der großen Ganggruppe kleiner als die restlichen Stufensprünge gewählt werden. Daraus ergibt sich eine bessere Schaltbarkeit, da hier eine Zugkraftunterbrechung ohnehin prinzipbedingt unvermeidbar ist.

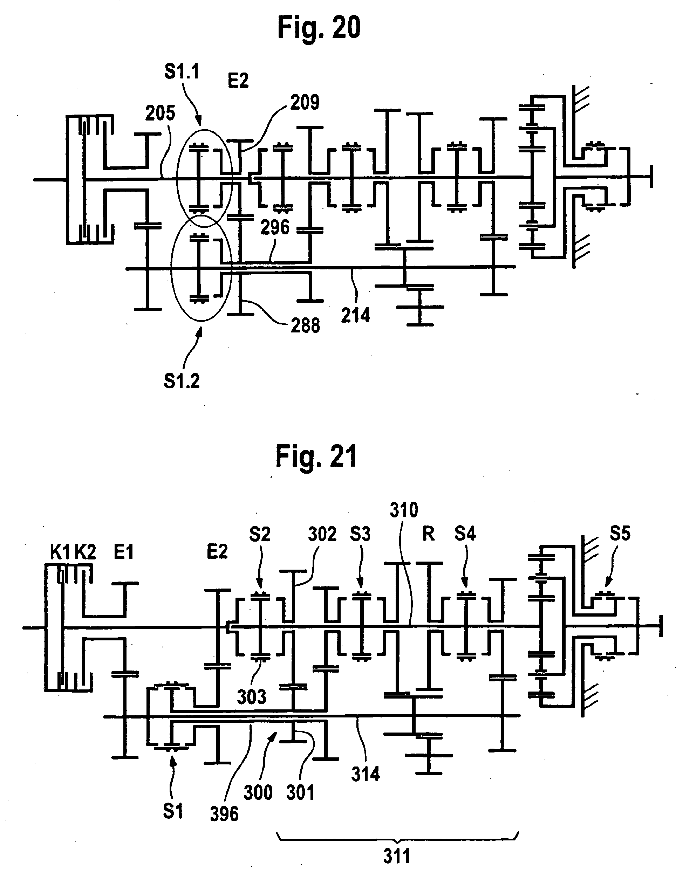

Fig. 20 zeigt eine gegenüber Fig. 1 weiterentwickelte Ausführungsform. Ein Vorteil dieser Ausführungsform ist, dass die beiden Schaltelemente S1.1 und S1.2 "konventionell" ausgeführt sind und somit axial kürzer bauen als das Schaltelement S1 in der Ausführungsform nach Fig.1. Unter "konventionell" ausgeführten Schaltelementen werden dabei solche Schaltelemente verstanden, die eine Neutral- sowie eine oder zwei Schaltstellungen aufweisen, wobei in letztgenannten genau zwei Bauteile - z.B. Zahnräder oder Wellen - drehfest miteinander verbunden werden. Im Gegensatz dazu liegt in der Mittelstellung des Schaltelementes S1 gemäß Fig. 1 keine Neutralstellung vor, sondern es werden drei. Bauteile miteinander drehfest verbunden.

Gemäß Fig. 20 ist anstelle des Schaltelementes S1 aus Fig. 1 ein Schaltelement S1.1 und ein Schaltelement S1.2 vorgesehen. Ein Eingangszahnrad 209 der zweiten Eingangskonstanten E2 ist als Losrad ausgeführt, wohingegen das Ausgangszahnrad 288 der zweiten Eingangskonstanten E2 drehfest koaxial auf der Hohlwelle 296 angeordnet ist. Das Schaltelemente S1.1 kann aus der vorderen Neutralstellung ausschließlich in eine hintere Stellung verschoben werden, in der es das Eingangszahnrad 209 drehfest mit der Innenwelle 205 verbindet. Das Schaltelement S1.2 kann aus der vorderen Neutralstellung ausschließlich in eine hintere Stellung verschoben werden, in der es das Ausgangszahnrad 288 bzw. die Hohlwelle 296 drehfest mit der Vorgelegewelle 214 verbindet.

Dieses lastschaltbare Gruppengetriebe gemäß Fig. 20 kann alternativ auch mit zwei Vorgelegewellen analog Fig. 17 ausgeführt sein.

Bei den lastschaltbaren Gruppengetrieben gemäß Fig. 1, Fig. 17 und Fig. 20 können keine Doppelrück- oder Doppelhochschaltungen ohne Unterbrechung der Zugkraft vorgenommen werden. Innerhalb der großen Ganggruppe und der kleinen Ganggruppe können jedoch zwei jeweils Dreifachrück- bzw. Dreifachhochschaltungen realisiert werden. Beispielhaft für die 16-Gang-Variante sind dies folgende Sprünge:
- in der großen Ganggruppe der Sprung vom fünfzehnten Vorwärtsgang V15 in den zwölften Vorwärtsgang V12 und zurück,
- in der großen Ganggruppe der Sprung vom dreizehnten Vorwärtsgang V13 in den zehnten Vorwärtsgang V10 und zurück,
- in der kleinen Ganggruppe der Sprung vom siebten Vorwärtsgang V7 in den vierten Vorwärtsgang V4 und zurück und
- in der kleinen Ganggruppe der Sprung vom fünften Vorwärtsgang V5 in den zweiten Vorwärtsgang V2 und zurück.

Dabei können die zugkraftunterbrechungsfreien Dreifachschaltungen V13 ⇆ V10 bzw. V5 ⇆ V2 jeweils zwischen zwei Vorwärtsgängen durchgeführt werden können, die nicht zu derselben Ganggruppe sequentiell lastschaltbarer Gänge gehören.

Bei dem lastschaltbaren Gruppengetriebe gemäß Fig. 1 bzw. Fig. 17 bzw. Fig. 20 können demzufolge bis zu sechzehn Vorwärtsgänge und prinzipiell vier Rückwärtsgänge vorgesehen sein. Alternativ können zwölf Vorwärtsgänge und zwei Kriechgänge vorgesehen sein, so dass zwei aneinander angrenzende Ganggruppen von je sechs sequentiell lastschaltbaren Vorwärtsgängen entstehen. Ferner kann das lastschaltbare Gruppengetriebe als Einfach-Schnellgang-Getriebe ausgeführt sein.

Ferner kann zwischen zwei benachbarten Vorwärtsgängen mit unterschiedlicher Übersetzung in der Hauptgruppe 100 zugkraftunterbrechungsfrei geschaltet werden, indem das Doppelrad 101 als Losrad auf der Vorgelegewelle 14 angeordnet ist. Daher sind die obersten sechs Vorwärtsgänge in der großen und kleinen Ganggruppe sequentiell lastschaltbar.

Gemäß den Ausführungsbeispielen gemäß Fig. 1 und Fig. 17 können beide Eingangskonstanten als Festräder auf den jeweiligen Antriebswellen ausgeführt sein. Dabei kann die Vorgelegewelle im Direktgang entkoppelt werden. Bei einer zweiten Vorgelegewelle ist für diese ein zusätzliches Schaltelement nötig. Die Schaltmuffe auf der Vorgelegewelle ist ohne Neutralstellung ausgeführt. Daher kann insgesamt eine breite Ausführung des Schaltelementes erforderlich werden, da die Schaltmuffe des Schaltelementes in den äußeren Stellungen über das Schaltelement hinaus "überhängt". Infolge der Verwendung einer Hohlwelle muss die Vorgelegewelle relativ dünn ausgeführt sein, so dass die Ausführung mit zwei Vorgelegewellen besonders vorteilhaft ist. Die Antriebsverzahnung mit der größten Übersetzung eines Vorwärtsganges und des Rückwärtsganges ist axial mittig auf der Vorgelegewelle angeordnet.

Fig. 21 zeigt in einer vierten Ausführungsform ein lastschaltbares Gruppengetriebe, das als 20-Gang-Getriebe oder als 16-Gang-Getriebe mit zwei Kriechgängen oder als 12-Gang-Getriebe mit vier Kriechgängen ausgeführt sein kann. Zusätzlich zum lastschaltbaren Gruppengetriebe gemäß Fig. 1 weist die Hauptgruppe 311 ein weiteres Zahnradpaar 300 auf. Es ergeben sich dann bis zu zwanzig Vorwärtsgänge. Alternativ können auch sechzehn Vorwärtsgänge und zwei Kriechgänge vorgesehen sein. Ferner können zwölf Vorwärtsgänge und vier Kriechgänge vorgesehen sein. Die koaxial auf der Vorgelegewelle 314 angeordnete Hohlwelle 396 trägt dabei ein drittes Zahnrad, das als Festrad 301 ausgeführt ist. Dieses Festrad 301 kämmt mit einem Losrad 302, welches das am weitesten vorne liegende Zahnrad der Hauptgruppe 311 bildet. Das zweite Schaltelement S2 ist im Gegensatz zum Ausführungsbeispiel gemäß Fig. 1 beidseitig wirksam, so dass bei Verschiebung einer Schaltmuffe 303 nach hinten eine drehfeste Verbindung zwischen der Hauptwelle 310 und dem Losrad 302 hergestellt wird. Ansonsten entspricht der Getriebeaufbau grundsätzlich dem Getriebeaufbau gemäß Fig. 1. Vergleichbar dem lastschaltbaren Gruppengetriebe mit dem Schaltdiagramm gemäß Fig. 19 weist auch das lastschaltbare Gruppengetriebe gemäß Fig. 21 in der Ausführungsform mit zwölf Vorwärtsgängen und vier Kriechgängen zwei aneinander angrenzende Ganggruppen von jeweils sechs sequentiell lastschaltbaren Vorwärtsgängen auf.

Auch das lastschaltbare Gruppengetriebe gemäß Fig. 21 ist analog Fig. 17 mit zwei Vorgelegewellen ausführbar.

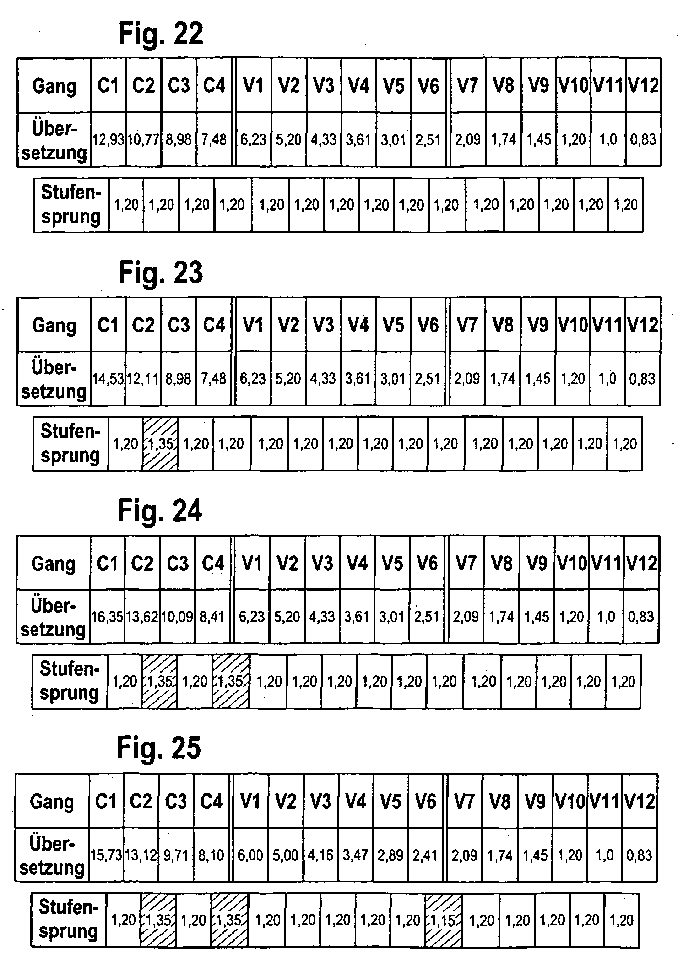

Zum ersten Ausführungsbeispiel wurde bereits dargestellt, dass bei der Stufe
- vom höchsten Kriechgang zum untersten Vorwärtsgang der kleinen Ganggruppe und
- vom höchsten Vorwärtsgang der kleinen Ganggruppe zum unterster Vorwärtsgang der großen Ganggruppe
von einer streng geometrischen Stufung abgewichen werden kann. Auch bei der Ausführungsform gemäß Fig. 21 kann analog der Stufensprung vom zweiten Kriechgang C2 zum dritten Kriechgang C3 abweichend von den übrigen Gangsprüngen gewählt werden. Dabei ist insbesondere eine Ausführungsform von Vorteil, bei welcher der Stufensprung vom zweiten Kriechgang C2 zum dritten Kriechgang C3 größer ist, als die übrigen Gangsprünge. Dabei zeigen Fig. 22 bis Fig. 25 für das lastschaltbare Gruppengetriebe gemäß Fig. 21 beispielhafte Übersetzungsauslegungen für die Variante als 12-Gang-Getriebe mit vier Kriechgängen. In allen vier Übersetzungsauslegungen Fig. 22 bis. Fig. 25 ist die Mehrzahl der Vorwärtsgänge mit einem Stufensprung von 1,20 geometrisch gestuft.

In Fig. 23 beträgt der Stufensprung vom zweiten Kriechgang C2 zum dritten Kriechgang C3 1,35, so dass dieser Stufensprung signifikant größer ist, als die Mehrzahl Stufensprünge.

In Fig. 24 beträgt zusätzlich der Stufensprung vom vierten Kriechgang C4 zum ersten Vorwärtsgang V1 1,35, so dass auch dieser Stufensprung signifikant größer ist, als die Mehrzahl Stufensprünge.

Fig. 25 stellt eine Weiterentwicklung der Übersetzungsauslegung nach Fig. 24 dar, wobei der Stufensprung vom sechsten Vorwärtsgang V6 zum siebten Vorwärtsgang V7 1,15 beträgt, so dass dieser Stufensprung signifikant kleiner ist, als die Mehrzahl Stufensprünge.

Die übrigen Varianten - auch des ersten Ausführungsbeispiels gemäß Fig. 1 - können hinsichtlich der Übersetzungen analog gestuft sein.

Auch bei dem lastschaltbaren Gruppengetriebe gemäß Fig. 21 gelten hinsichtlich der Mehrfachrückschaltung die zum Ausführungsbeispiel gemäß Fig. 1 dargestellten Grundsätze.

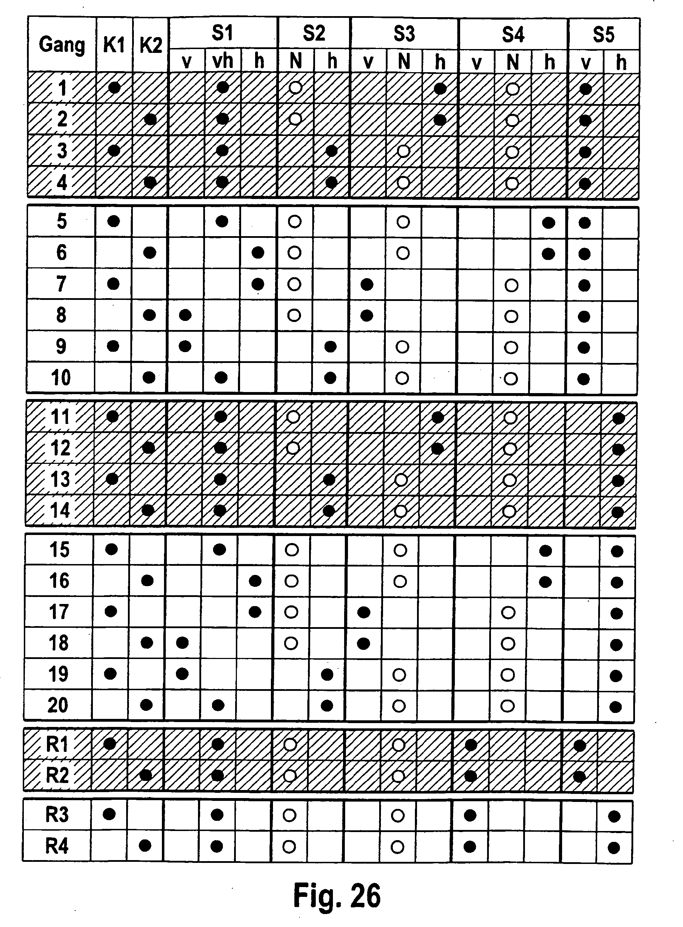

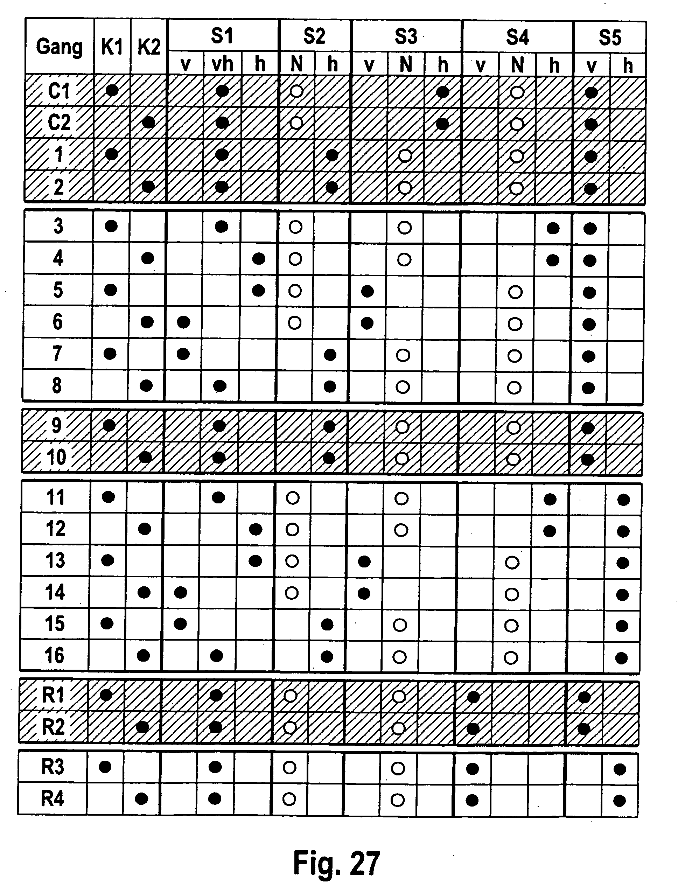

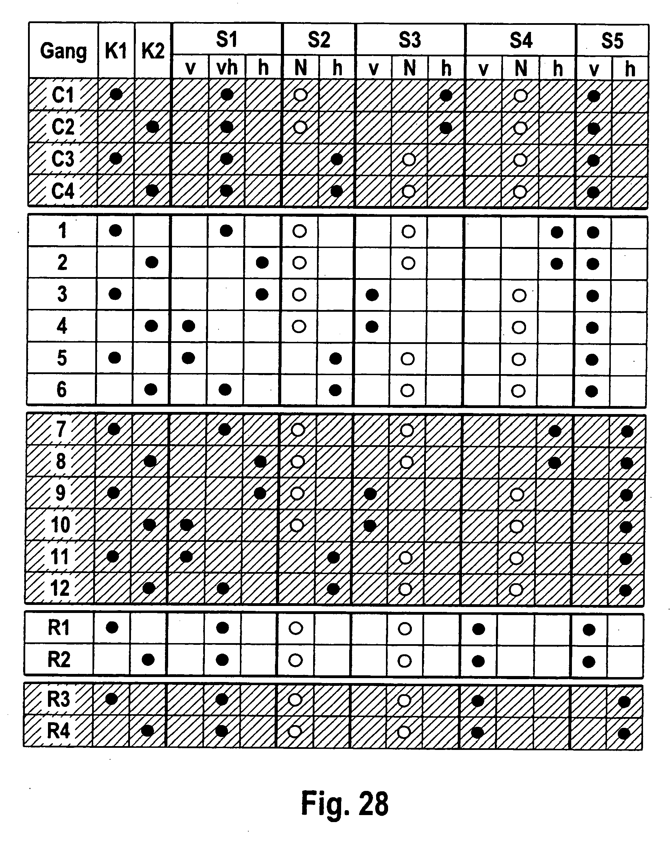

Fig. 26 zeigt dabei ein Schaltdiagramm des lastschaltbaren Gruppengetriebes gemäß Fig. 21 in der Ausführungsform als 20-Gang-Getriebe. Fig. 27 zeigt ein Schaltdiagramm des lastschaltbaren Gruppengetriebes gemäß Fig. 21 in der Ausführungsform als 16-Gang-Getriebe mit zwei Kriechgängen. Fig. 28 zeigt ein Schaltdiagramm des lastschaltbaren Gruppengetriebes gemäß Fig. 21 in der Ausführungsform als 12-Gang-Getriebe mit vier Kriechgängen.

Bei dem lastschaltbaren Gruppengetriebe gemäß Fig. 21 können demzufolge bis zu zwanzig Vorwärts-Gänge und prinzipiell vier Rückwärtsgänge vorgesehen sein. Ferner kann das lastschaltbare Gruppengetriebe als Einfach-Schnellgang-Getriebe ausgeführt sein. Infolge der besonderen Ausgestaltung der Hohlwelle 396 auf der Vorgelegewelle 314 kann zwischen zwei benachbarten Gängen mit unterschiedlicher Übersetzung in der Hauptgruppe 311 zugkraftunterbrechungsfrei geschaltet werden.

Gemäß dem Ausführungsbeispiel gemäß Fig. 21 können beide Eingangskonstanten als Festräder auf den jeweiligen Zwischenwellen ausgeführt sein. Dabei kann die Vorgelegewelle im Direktgang entkoppelt werden. Bei einer zweiten Vorgelegewelle ist für diese ein zusätzliches Schaltelement nötig. Die Schaltmuffe auf der Vorgelegewelle ist ohne Neutralstellung ausgeführt. Daher kann insgesamt eine breite Ausführung des Schaltelementes erforderlich werden, da die Schaltmuffe des Schaltelementes in den äußeren Stellungen über das Schaltelement hinaus "überhängt". Infolge der Verwendung einer Hohlwelle muss die Vorgelegewelle relativ dünn ausgeführt sein, so dass die Ausführung mit zwei Vorgelegewellen besonders vorteilhaft ist. Der Vorteil der Variante mit zwölf Vorwärtsgängen und vier Kriechgängen ist, dass ein ähnlicher Doppelkupplungsgetriebe-Funktionalitätsumfang, wie bei der Ausführungsvariante gemäß dem Schaltdiagramm Fig. 19, vorliegt. Abgesehen von den vier Kriechgängen erhält man lediglich bei der Umschaltung in der Rangegruppe eine Zugkraftunterbrechung. Wählt man folgende Stufensprünge:
- zwischen den Kriechgängen C1 und C2: 1,20
- zwischen den Kriechgängen C2 und C3: 1,35
- zwischen den Kriechgängen C3 und C4: 1,20
- zwischen dem vierten Kriechgang C4 und dem ersten Vorwärtsgang V1: 1,35
- restliche Gänge: 1,20,
so ergibt sich eine Gesamtspreizung von 19,5. Bei dieser Stufensprungwahl kann es je nach Einsatzzweck des Fahrzeuges erforderlich sein, bei voller Beladung auch beim Anfahren die Kriechgänge - zumindest den dritten Kriechgang C3 oder den vierten Kriechgang C4 - zu nutzen, da die Übersetzung des "echten" ersten Vorwärtsganges für Nutzfahrzeuganwendungen relativ lang ist. Hinsichtlich der Baulänge wäre die Auslegung von zwei Radpaaren als Kriechgänge günstig, da diese axial kürzer bauen, als "normale Vorwärtsgänge". Solche Kriechgänge bauen deshalb axial kürzer, weil sie nur in einem von zwei Schaltzuständen der Rangegruppe genutzt werden, womit der zeitliche Anteil der Nutzung geringer ist als bei einem normalen Vorwärtsgang, der in beiden Schaltzuständen der Rangegruppe genutzt wird.

In sämtlichen Ausführungsbeispielen kann das der Rangegruppe zugeordnete fünfte Schaltelement S5 anstelle als Klauenkupplung auch als eine Reibschlusskupplung ausgeführt sein, so dass die Ranggruppe lastschaltbar ist. Als Reibschlusskupplung bieten sich insbesondere eine Lamellenkupplung oder eine verstärkte Einkonus- oder Mehrkonussynchronisierung an.

Anstelle von nur zwei Eingangskonstanten E1 und E2 kann die Splitgruppe in einer alternativen Ausbildung auch mehr - insbesondere drei - Eingangskonstanten aufweisen.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen. Insbesondere wird sich eine Beanspruchung der Größenverhältnisse der Zahnradpaarungen in der Hauptgruppe der lastschaltbaren Gruppengetriebe vorbehalten. Insbesondere die in Fig. 22 bis Fig. 25 angegebenen Zahlenwerten für die Übersetzung und den Stufensprung bezogen auf die jeweiligen Vorwärts- und Rückwärtsgänge sind Merkmale, deren Beanspruchung sich vorbehalten wird.

## Patentansprüche

1. Lastschaltbares Gruppengetriebe mit zumindest zwei Eingangskonstanten (E1, E2), einer Vorgelegewelle (14) und einer Doppelkupplung (1), die zwei Einzelkupplungen (K1, K2) umfasst, wobei ein Leistungspfad von der ersten Einzelkupplung (K1) über einen Direktgang (V15) auf eine Hauptwelle (10) führbar ist, wobei die beiden dem Direktgang (V15) unmittelbar benachbarten Vorwärtsgänge (V14 und V16) über die zweite Einzelkupplung (K2) und die Vorgelegewelle (14) verlaufen und wobei eine konzentrisch zu der Vorgelegewelle (14) angeordnete Hohlwelle (96) mindestens zwei Zahnräder (88, 13) trägt, von denen das eine Zahnrad (88) der zweiten Eingangskonstante (E2) zugehörig ist, und wobei ein der Doppelkupplung (1) am nächsten stehendes Zahnrad (8) der ersten Eingangskonstanten (E1) zugehörig ist,
**dadurch gekennzeichnet, dass**
der Leistungspfad eines Vorwärtsganges (V16) von der zweiten Einzelkupplung (K2) über die erste Eingangskonstante (E1), die zweite Eingangskonstante (E2) und die mit einem weiteren Zahnrad (9) der zweiten Eingangskonstante (E2) drehfest gekoppelte Hauptwelle (10) verläuft.

2. Lastschaltbares Gruppengetriebe nach Patentanspruch 1,
**dadurch gekennzeichnet, dass**
das der Doppelkupplung (1) am nächsten stehende und der ersten Eingangskonstanten (E1) zugehörige Zahnrad (8) als Festrad (8) ausgeführt ist.

3. Lastschaltbares Gruppengetriebe nach Patentanspruch 1,
**dadurch gekennzeichnet, dass**
mit sämtlichen Zahnradpaaren einer Hauptgruppe (100) mittels der beiden unterschiedliche Eingangskonstanten (E1, E2) zumindest zwei unterschiedliche Übersetzungen darstellbar sind, wobei keine Übersetzung doppelt dargestellt ist.

4. Lastschaltbares Gruppengetriebe nach einem der vorhergehenden Patentansprüche,
**dadurch gekennzeichnet, dass**
zwischen zwei benachbarten Gängen, die durch einen Wechsel der Eingangskonstanten (E1 bzw. E2) zustande kommen, zugkraftunterbrechungsfrei geschaltet werden kann.

5. Lastschaltbares Gruppengetriebe nach einem der vorhergehenden Patentansprüche,
**dadurch gekennzeichnet, dass**
die zweite Eingangskonstante (E2) rotatorisch von der Hohlwelle (96) entkoppelbar ist.

6. Lastschaltbares Gruppengetriebe nach einem der vorhergehenden Patentansprüche,
**dadurch gekennzeichnet, dass**
zwischen zumindest zwei benachbarten Vorwärtsgängen, die durch eine Übersetzungsänderung innerhalb der Hauptgruppe (10) zustande kommen, zugkraftunterbrechungsfrei geschaltet werden kann.

7. Lastschaltbares Gruppengetriebe nach einem der vorhergehenden Patentansprüche,
**dadurch gekennzeichnet, dass**
der über beide Eingangskonstanten (E1-E2) verlaufende Leistungspfad ins Schnelle übersetzt.

8. Lastschaltbares Gruppengetriebe nach einem der vorhergehenden Patentansprüche,
**dadurch gekennzeichnet, dass**
die höchsten sechs Vorwärtsgänge (V11 - V16 bzw. V7 - V12 bzw. V15 - V20 bzw.) sequentiell lastschaltbar sind.

9. Lastschaltbares Gruppengetriebe nach einem der vorhergehenden Patentansprüche,
**dadurch gekennzeichnet, dass**
ein Schaltelement (S1) derart ausgeführt ist, dass es in jeder von drei möglichen Stellungen (v, vh, h) zumindest zwei Getriebeelemente - d.h. Zahnräder oder Wellen - drehfest miteinander koppelt, wobei in einer der drei Stellungen die Vorgelegewelle (14) mit der Hohlwelle (96) und einem koaxial drehbar auf der Hohlwelle (96) angeordneten Losrad (88) gekoppelt, ist.

10. Lastschaltbares Gruppengetriebe nach einem der vorhergehenden Patentansprüche,
**dadurch gekennzeichnet, dass**
eine Rangegruppe (28) vorgesehen ist, mittels welcher die Anzahl der Gänge erweiterbar ist.

11. Lastschaltbares Gruppengetriebe nach Patentanspruch 9,
**dadurch gekennzeichnet, dass**
die Rangegruppe (28) als Planetensatz oder in Vorgelegebauweise ausgeführt ist.

12. Lastschaltbares Gruppengetriebe nach Patentanspruch 10,
**dadurch gekennzeichnet, dass**
die Rangegruppe (28) mittels einer Reibschlusskupplung lastschaltbar ist.

13. Lastschaltbares Gruppengetriebe nach einem der vorhergehenden Patentansprüche,
**dadurch gekennzeichnet, dass**
zumindest zwei Vorgelegewellen (114a, 114b) vorgesehen sind.

14. Lastschaltbares Gruppengetriebe nach einem der vorhergehenden Patentansprüche,
**dadurch gekennzeichnet, dass**
einige Dreifachsprünge lastschaltbar sind.

15. Lastschaltbares Gruppengetriebe nach einem der Patentansprüche 9 bis 11,
**dadurch gekennzeichnet, dass**
zumindest ein Kriechgang (C1 bis C2) vorgesehen ist, dessen Übersetzungsstufe im Hauptgetriebe (100) ausschließlich in einem Schaltzustand (v) der Rangegruppe (28) genutzt wird.

16. Lastschaltbares Gruppengetriebe nach einem der vorhergehenden Patentansprüche,
**dadurch gekennzeichnet, dass**
die beiden Eingangskonstanten (E1, E2) unterschiedliche Übersetzungen aufweisen.

17. Lastschaltbares Gruppengetriebe nach einem der vorhergehenden Patentansprüche,
**dadurch gekennzeichnet, dass**
zwischen dem Direktgang (V15) und dem nächstniedrigeren (V14) Vorwärtsgang in beiden Richtungen zugkraftunterbrechungsfrei geschaltet werden kann.

18. Lastschaltbares Gruppengetriebe nach einem der vorhergehenden Patentansprüche,
**dadurch gekennzeichnet, dass**
zwischen dem Direktgang (V15) und dem nächsthöheren Vorwärtsgang (V16) in beide Richtungen zugkraftunterbrechungsfrei geschaltet werden kann.

19. Lastschaltbares Gruppengetriebe nach einem der vorhergehenden Patentansprüche,
**dadurch gekennzeichnet, dass**
zwischen zumindest sechs aufeinander abfolgenden Vorwärtsgängen (V11 bis V16) in beide Richtungen sequentiell zugkraftunterbrechungsfrei geschaltet werden kann.

20. Lastschaltbares Gruppengetriebe nach einem der vorhergehenden Patentansprüche,
**dadurch gekennzeichnet, dass**
zumindest eine Übersetzungss.tufe eines Vorwärtsganges im Hauptgetriebe (100 bzw. 311) über eine synchrongliederfreie formschlüssige Klauenkupplung betätigbar ist.

21. Lastschaltbares Gruppengetriebe nach einem der vorhergehenden Patentansprüche,
**dadurch gekennzeichnet, dass**
zumindest eine Übersetzungsstufe eines Rückwärtsganges im Hauptgetriebe (100 bzw. 311) über eine synchrongliederfreie formschlüssige Klauenkupplung betätigbar ist.

22. Lastschaltbares Gruppengetriebe nach einem der vorhergehenden Patentansprüche,
**dadurch gekennzeichnet, dass**
bei eingelegtem Direktgang (V15) zumindest eine Vorgelegewelle (14) rotatorisch von der Rotationsbewegung eines mit einer Primärmasse (2) der Doppelkupplung (1) verbundenen Antriebsmotors und der Hauptwelle (10) entkoppelbar ist.

23. Lastschaltbares Gruppengetriebe nach einem der vorhergehenden Patentansprüche,
**dadurch gekennzeichnet, dass**
die Mehrzahl der Vorwärtsgänge zumindest näherungsweise geometrisch gestuft ist.

24. Lastschaltbares Gruppengetriebe nach Patentanspruch 22,
**dadurch gekennzeichnet, dass**
zumindest ein Stufensprung (C2 zu C3 / V6 zu V7) signifikant von der Mehrzahl der Stufensprünge abweicht.

25. Lastschaltbares Gruppengetriebe nach Patentanspruch 23,
**dadurch gekennzeichnet, dass**
der signifikant von der Mehrzahl der Stufensprünge abweichende Stufensprung (C2 zu C3) größer ist, als die Mehrzahl der Stufensprünge.

26. Lastschaltbares Gruppengetriebe nach Patentanspruch 23,
**dadurch gekennzeichnet, dass**
der signifikant von der Mehrzahl der Stufensprünge abweichende Stufensprung (V6 zu V7) kleiner ist, als die Mehrzahl der Stufensprünge.

27. Lastschaltbares Gruppengetriebe nach Patentanspruch 23,
**dadurch gekennzeichnet, dass**
zumindest zwei Stufensprünge (C2 zu C3, V6 zu V7) signifikant von den übrigen Stufensprüngen abweichen und zumindest einer dieser Stufensprünge (V6 zu V7) kleiner ist als die Mehrzahl der Stufensprünge und zumindest ein weiterer Stufensprung (C2 zu C3) größer ist als die Mehrzahl der Stufensprünge.

28. Lastschaltbares Gruppengetriebe nach Patentanspruch 1 bis 8 und 10 bis 27,
**dadurch gekennzeichnet, dass**
ein Eingangszahnrad (209) der zweiten Eingangskonstanten (E2) als Losrad ausgeführt ist, wohingegen ein Ausgangszahnrad (288) der zweiten Eingangskonstanten (E2) und ein weiteres Zahnrad (13) drehfest koaxial auf der Hohlwelle (296) angeordnet sind.

## Claims

1. Power-shiftable group transmission with at least two input constants (E1, E2), a layshaft (14) and a double clutch (1) comprising two single clutches (K2 , K2), wherein a power path can be routed from the first single clutch (K1) via a direct drive (V15) to a main shaft (10), wherein the two forward gears (V14 and V16) immediately adjacent to the direct drive (V15) run via the second single clutch (K2) and the layshaft (14), and wherein a hollow shaft (96) concentric with the layshaft (14) supports at least two gears (88, 13), whereof one gear (88) is associated with the second input constant (E2), and wherein a gear (8) nearest to the double clutch (1) is associated with the first input constant (E1),
**characterised in that**
the power path of a forward gear (V16) runs from the second single clutch (K2) via the first input constant (E1), the second input constant (E2) and the main shaft (10) non-rotatably coupled to a further gear (9) of the second input constant (E2).

2. Power-shiftable group transmission according to patent claim 1,
**characterised in that**
the gear (8) nearest to the double clutch (1) and associated with the first input constant (E1) is designed as a fixed gear (8).

3. Power-shiftable group transmission according to patent claim 1,
**characterised in that**
at least two different ratios can be represented with all gear pairs of a main group (100) by means of the two different input constants (E1, E2), none of the ratios being represented twice.

4. Power-shiftable group transmission according to any of the preceding patent claims,
**characterised in that**
it is possible to change between two mutually adjacent gears created by a change of the input constants (E1, E2) without any interruption of traction.

5. Power-shiftable group transmission according to any of the preceding patent claims,
**characterised in that**
the second input constant (E2) is capable of rotational decoupling from the hollow shaft (96).

6. Power-shiftable group transmission according to any of the preceding patent claims,
**characterised in that**
it is possible to change between two mutually adjacent forward gears created by a ratio change within the main group (100) without any interruption of traction.

7. Power-shiftable group transmission according to any of the preceding patent claims,
**characterised in that**
the power path running via the two input constants (E1 - E2) changes up.

8. Power-shiftable group transmission according to any of the preceding patent claims,
**characterised in that**
the maximum of six forward gears (V11 - V16 or V7 - V12 or V15 - V20) are power-shiftable sequentially.

9. Power-shiftable group transmission according to any of the preceding patent claims,
**characterised in that**
a shifting component (S1) is designed such that it non-rotatably couples at least two transmission elements - i.e. gears or shafts - in each of three possible positions (v, vh, h), wherein in one of the three positions the layshaft (14) is coupled to the hollow shaft (96) and an idler gear (88) mounted coaxially and rotatably on the hollow shaft (96).

10. Power-shiftable group transmission according to any of the preceding patent claims,
**characterised in that**
a range group (28) is provided, by means of which the number of gears can be increased.

11. Power-shiftable group transmission according to patent claim 9,
**characterised in that**
the range group (28) is designed as a planetary gear set or as an auxiliary transmission.

12. Power-shiftable group transmission according to patent claim 10,
**characterised in that**
the range group (28) is power-shiftable by means of a frictional clutch.

13. Power-shiftable group transmission according to any of the preceding patent claims,
**characterised in that**
at least two layshafts (114a, 114b) are provided.

14. Power-shiftable group transmission according to any of the preceding patent claims,
**characterised in that**
some triple jumps are power-shiftable.

15. Power-shiftable group transmission according to any of patent claims 9 to 11,
**characterised in that**
at least one crawler gear (C1 to C2) is provided, the gear ratio of which is used in the main gearbox (100) exclusively in a shifting state (v) of the range group (28).

16. Power-shiftable group transmission according to any of the preceding patent claims,
**characterised in that**
the two input constants (E1, E2) have different ratios.

17. Power-shiftable group transmission according to any of the preceding patent claims,
**characterised in that**
it is possible to change between the direct drive (V15) and the next lower forward gear (V14) in either direction without any interruption of traction.

18. Power-shiftable group transmission according to any of the preceding patent claims,
**characterised in that**
it is possible to change between the direct drive (V15) and the next higher forward gear (V16) in either direction without any interruption of traction.

19. Power-shiftable group transmission according to any of the preceding patent claims,
**characterised in that**
it is possible to change sequentially between at least six adjoining forward gears (V11 to V16) in either direction without any interruption of traction.

20. Power-shiftable group transmission according to any of the preceding patent claims,
**characterised in that**
at least one gear ratio of a forward gear in the main gearbox (100 or 311 respectively) can be actuated via a positive clutch without synchroniser elements.

21. Power-shiftable group transmission according to any of the preceding patent claims,
**characterised in that**
at least one gear ratio of a reverse gear in the main gearbox (100 or 311 respectively) can be actuated via a positive clutch without synchroniser elements.

22. Power-shiftable group transmission according to any of the preceding patent claims,
**characterised in that**
if direct drive (V15) is selected, at least one layshaft (14) can be rotationally decoupled from the rotary motion of an engine connected to a primary mass (2) of the double clutch (1) and from the main shaft (10).

23. Power-shiftable group transmission according to any of the preceding patent claims,
**characterised in that**
the plurality of the forward gears is staged in an at least approximately geometrical way.

24. Power-shiftable group transmission according to patent claim 22,
**characterised in that**
at least one ratio jump (C2 to C3 / V6 to V7) significantly differs from the plurality of ratio jumps.

25. Power-shiftable group transmission according to patent claim 23,
**characterised in that**
the ratio jump (C2 to C3) differing significantly from the plurality of ratio jumps is greater than the plurality of ratio jumps.

26. Power-shiftable group transmission according to patent claim 23,
**characterised in that**
the ratio jump (V6 to V7) differing significantly from the plurality of ratio jumps is less than the plurality of ratio jumps.

27. Power-shiftable group transmission according to patent claim 23,
**characterised in that**
at least two ratio jumps (C2 to C3, V6 to V7) significantly differ from the remaining ratio jumps, and **in that** at least one of these ratio jumps (V6 to V7) is less than the plurality of ratio jumps and at least one further ratio jump (C2 to C3) is greater than the plurality of ratio jumps.

28. Power-shiftable group transmission according to patent claims 1 to 8 and 10 to 27,
**characterised in that**
an input gear (209) of the second input constant (E2) is designed as an idler gear, whereas an output gear (288) of the second input constant (E2) and a further gear (13) are non-rotationally and coaxially mounted on the hollow shaft (296).

## Revendications

1. Boîte de sélection de gamme de rapports couplable sous charge avec au moins deux constantes d'entrée (E1, E2), un arbre intermédiaire (14) et un double embrayage (1), qui comprend deux embrayages individuels (K1, K2), un trajet de puissance du premier embrayage individuel (K1) pouvant être guidé par une prise directe (V15) sur un arbre principal (10), les deux rapports de marche avant (V14 et V16) directement adjacents à la prise directe (V15) passant par le second embrayage individuel (K2) et l'arbre intermédiaire (14) et un arbre creux (96) disposé de manière concentrique par rapport à l'arbre intermédiaire (14) portant au moins deux engrenages (88, 13), dont un engrenage (88) appartient à la seconde constante d'entrée (E2), et un engrenage (8) disposé le plus près du double embrayage (1) appartenant à la première constante d'entrée (E1), **caractérisée en ce que** le trajet de puissance d'un rapport de marche avant (V16) du second embrayage (K2) individuel passe par la première constante d'entrée (E1), la seconde constante d'entrée (E2) et l'arbre principal (10) accouplé de façon à être solidaire en rotation avec un autre engrenage (9) de la seconde constante d'entrée (E2).

2. Boîte de sélection de gamme de rapports couplable sous charge selon la revendication 1, **caractérisée en ce que** l'engrenage (8) disposé le plus près du double embrayage (1) et appartenant à la première constante d'entrée (E1) est conçu en tant que pignon fixe.

3. Boîte de sélection de gamme de rapports couplable sous charge selon la revendication 1, **caractérisée en ce qu'**avec des paires de roues dentées complètes d'une boîte de vitesse principale (100) au moyen des deux constantes d'entrée différentes (E1, E2) au moins deux rapports de transmission peuvent être représentés, aucun rapport de transmission n'étant représenté en double.

4. Boîte de sélection de gamme de rapports couplable sous charge l'une quelconque des revendications précédentes, **caractérisée en ce qu'**il est possible de passer d'un rapport à un rapport adjacent, en maintenant la force de traction, ces deux rapports résultant d'une modification des constantes d'entrée (E1 et/ou E2).

5. Boîte de sélection de gamme de rapports couplable sous charge selon l'une quelconque des revendications précédentes, **caractérisée en ce que** la seconde constante d'entrée (E2) peut être désaccouplée rotativement de l'arbre creux (96).

6. Boîte de sélection de gamme de rapports couplable sous charge selon l'une quelconque des revendications précédentes, **caractérisée en ce qu'**il est possible de passer d'un rapport de marche avant à un rapport de marche avant adjacent, en maintenant la force de traction, ces deux rapports résultant d'une modification de la multiplication dans la boîte de vitesses principale (10).

7. Boîte de sélection de gamme de rapports couplable sous charge selon l'une quelconque des revendications précédentes, **caractérisée en ce que** le trajet de puissance passant par les deux constantes d'entrée (E1-E2) assure la multiplication.

8. Boîte de sélection de gamme de rapports couplable sous charge selon l'une quelconque des revendications précédentes, **caractérisée en ce que** les six rapports de marche avant les plus élevés (V11 - V16 et / ou V7 - V12 et / ou V15 - V 20 etc.) peuvent être couplés sous charge de manière séquentielle.

9. Boîte de sélection de gamme de rapports couplable sous charge selon l'une quelconque des revendications précédentes, **caractérisée en ce qu'**un élément d'accouplement (S1) est conçu de manière telle qu'au moins deux éléments de transmission - c'est-à-dire des roues dentées et des arbres - se couplent l'un avec l'autre bloquées en rotation dans chacune des trois positions possibles (v, vh, h), dans l'une des trois positions l'arbre intermédiaire (14) est couplé avec l'arbre creux (96) et avec un pignon fou (88) disposé en rotation de manière coaxiale sur l'arbre creux (96).

10. Boîte de sélection de gamme de rapports couplable sous charge selon l'une quelconque des revendications précédentes, **caractérisée en ce qu'**un groupe-relais (28) est prévu, au moyen duquel il est possible d'augmenter le nombre de rapports.

11. Boîte de sélection de gamme de rapports couplable sous charge selon la revendication 9, **caractérisée en ce que** le groupe-relais (28) est conçu en tant que train planétaire ou en tant qu'arbre intermédiaire.

12. Boîte de sélection de gamme de rapports couplable sous charge selon la revendication 10, **caractérisée en ce que** le groupe-relais (28) peut être couplé sous charge au moyen d'un embrayage à friction.

13. Boîte de sélection de gamme de rapports couplable sous charge l'une quelconque des revendications précédentes, **caractérisée en ce qu'**au moins deux arbres intermédiaires (114a, 114b) sont prévus.

14. Boîte de sélection de gamme de rapports couplable sous charge l'une quelconque des revendications précédentes, **caractérisée en ce que** quelques écarts triples peuvent être couplés sous charge.

15. Boîte de sélection de gamme de rapports couplable sous charge selon l'une quelconque des revendications 9 à 11, **caractérisée en ce qu'**au moins un rapport de manoeuvre (C1 à C2) est prévu dont le rapport de multiplication dans la boîte principale (100) est utilisé exclusivement dans un état de commutation (v) du groupe-relais.

16. Boîte de sélection de gamme de rapports couplable sous charge selon l'une quelconque des revendications précédentes, **caractérisée en ce que** les deux constantes d'entrée (E1-E2) présentent des multiplications différentes.

17. Boîte de sélection de gamme de rapports couplable sous charge selon l'une quelconque des revendications précédentes, **caractérisée en ce qu'**il est possible de passer de la prise directe (V15) au rapport de marche (V14) avant inférieur adjacent dans les deux directions en maintenant la force de traction.

18. Boîte de sélection de gamme de rapports couplable sous charge selon l'une quelconque des revendications précédentes, **caractérisée en ce qu'**il est possible de passer de la prise directe (V15) au rapport de marche avant adjacent supérieur (V16) dans les deux directions en maintenant la force de traction.

19. Boîte de sélection de gamme de rapports couplable sous charge selon l'une quelconque des revendications précédentes, **caractérisée en ce qu'**il est possible de passer entre au moins six rapports de marche avant successifs (de V11 à V16) dans les deux directions de manière séquentielle en maintenant la force de traction.

20. Boîte de sélection de gamme de rapports couplable sous charge l'une quelconque des revendications précédentes, **caractérisée en ce qu'**au moins un rapport de multiplication d'un rapport de marche avant peut être actionné dans la boîte principale (100 et/ou 311) par un accouplement à crabots à liaison positive sans élément de synchronisation.

21. boîte de sélection de gamme de rapports couplable sous charge l'une quelconque des revendications précédentes, **caractérisée en ce qu'**au moins un rapport de multiplication d'un rapport de marche arrière peut être actionné dans la boîte principale (100 et/ou 311) par un accouplement à crabots à liaison positive sans élément de synchronisation.

22. Boîte de sélection de gamme de rapports couplable sous charge selon l'une quelconque des revendications précédentes, **caractérisée en ce que** lorsque la prise directe (V15) est enclenchée, au moins un arbre intermédiaire (14) peut être désaccouplé en rotation du mouvement de rotation d'un moteur d'entraînement relié à une masse primaire (2) de l'embrayage (1) double et de l'arbre principal (10).

23. Boîte de sélection de gamme de rapports couplable sous charge selon l'une quelconque des revendications précédentes, **caractérisée en ce qu'**une pluralité de rapports de marche avant est étagée au moins approximativement de manière géométrique.

24. Boîte de sélection de gamme de rapports couplable sous charge selon la revendication 22, **caractérisée en ce qu'**au moins un écart (C2 à C3 / V6 à V7) se différencie de manière significative de la pluralité des écarts.

25. Boîte de sélection de gamme de rapports couplable sous charge selon la revendication 23, **caractérisée en ce que** l'écart (C2 à C3) différent de manière significative de la pluralité des écarts est supérieur à la pluralité des écarts.

26. Boîte de sélection de gamme de rapports couplable sous charge selon la revendication 23, **caractérisée en ce que** l'écart (V6 à V7) significativement différent de la pluralité des écarts est inférieur à la pluralité des écarts.

27. Boîte de sélection de gamme de rapports couplable sous charge selon la revendication 23, **caractérisée en ce qu'**au moins deux écarts (entre C2 et C3, entre V6 et V7) sont significativement différents des autres écarts et au moins un de ces écarts (entre V6 et V7) est plus petit que la pluralité des écarts et au moins un autre écart (entre C2 et C3) est plus grand que la pluralité des écarts.

28. Boîte de sélection de gamme de rapports couplable sous charge selon la revendication 1 à 8, **caractérisée en ce qu'**une roue dentée d'entrée (209) de la seconde constante d'entrée (E2) est conçue en tant que pignon fou, tandis qu'une roue dentée de sortie (288) de la seconde constante d'entrée (E2) et une autre roue dentée (13) sont disposées coaxialement de façon bloquée en rotation sur l'arbre creux (296).
